# EUROPÄISCHE PATENTSCHRIFT

(11) **EP 1 046 991 B1**
(45) Veröffentlichungstag und Bekanntmachung des Hinweises auf die Patenterteilung: **11.12.2002**
(21) Anmeldenummer: 99107827.0
(22) Anmeldetag: 20.04.1999
(51) Int. Cl.: G06F 11/00

(54) **Verfahren zum Testen der Unabhängigkeit und Verträglichkeit eines Software-Moduls**
Method for testing the autonomy and compatibilty of a software module
Méthode pour tester l' autonomie et la compatibilité d'un module programme

(43) Veröffentlichungstag der Anmeldung: 25.10.2000
(73) Patentinhaber: SIEMENS AKTIENGESELLSCHAFT, 80333 München (DE); Siemens VDO Automotive S.A.S., 31036 Toulouse cedex 01 (FR)
(72) Erfinder: Göser, Gerhard, Dipl-Ing. (FH), 31170 Tournefeuile (FR)
(74) Vertreter: Berg, Peter, Dipl.-Ing.

(56) Entgegenhaltungen:
- US-A- 5 450 575
- FUN TING CHAN ET AL.: "AIDA - A Dynamic Data FLow Anomaly Detection System for Pascal Programs" SOFTWARE PRACTICE & EXPERIENCE., Bd. 17, Nr. 3, März 1987 (1987-03), Seiten 227-239, XP000743803 JOHN WILEY & SONS LTD. CHICHESTER., GB ISSN: 0038-0644
- CHANG YUN PARK ET AL.: "Experiments With A Program Timing Tool Bases On SOurce-Level Timing Schema" PROCEEDINGS OF THE REAL-TIME SYSTEMS SYMPOSIUM, 5. - 7. Dezember 1990, Seiten 72-81, XP000214338 Lake Buena Vista, Florida

## Beschreibung

Software und Teile einer Software (im folgenden Software-Module genannt) werden heute häufig von verschiedenen Personen geschrieben. Dabei muß sichergestellt werden, daß die Aktionen eines Software-Modules zu denen eines anderen Software-Modules nicht im Widerspruch stehen oder sie gar rückgängig machen. Bei offener Software, das heißt in der Umgebung eines Personal-Computers, wird die Unabhängigkeit und Verträglichkeit der Software-Module untereinander von einer dynamischen Bereichsüberwachungssoftware garantiert.

Für in Geräte (mit zum Beispiel Mikrocontrollern, Mikroprozessoren oder Steuerungen) eingebettete Software wird heute diese Eigenschaft durch Regeln für die Zusammenarbeit einzelner Software-Module sichergestellt: Zuerst wird die Software in lesbarer Form als Source-Code mit der zugehörigen Dokumentation erstellt. Dann wird sie in die maschinenlesbare Form, dem Object-Code, compiliert. Firmeninterne Aufgabenteilung und Regeln (Design Rules) stellen die Verträglichkeit der einzelnen Software-Module untereinander sicher. In einem Integrationstest wird das Zusammenspiel der Software-Module in Funktion und Zeitverhalten überprüft.

Alle diese Arbeiten werden bei eingebetteter Software (Embedded Software) unter offener Zusammenarbeit aller Beteiligten, das heißt unter Vorlage der Source-Codes und deren Dokumentationen, durchgeführt.

Die Komplexität von eingebetteten Software-Modulen, die kooperative Funktionen zwischen zwei oder mehreren Geräten ausführen, ist so groß geworden, daß sie von einzelnen Firmen nicht mehr alleine beherrscht beziehungsweise erstellt werden können. Die Kooperation von Wettbewerbern bei der Erstellung der eingebetteten Software für ein oder mehrere Geräte ist notwendig geworden. Die Wettbewerbssituation zwischen den Firmen verbietet allerdings die Offenlegung des Source-Codes und zwingt zur Einbettung von bereits compiliertem Object-Code. Damit ist der Inhalt einer technischen Funktion dem Ersteller einer anderen Funktion nicht mehr im Detail bekannt. Er kann also darauf keine Rücksicht mehr nehmen.

Damit ein Software-Modul seine technische Funktionalität unabhängig von und verträglich mit einer anderen technischen Funktion erfüllen kann, müßte eine zusätzliche Bereichsüberwachungsfunktion installiert werden. Dies wäre aber relativ aufwendig und damit teuer.

Es existieren Software-Werkzeuge, die die Einhaltung formaler Regeln (Design Rules) im Source-Code oder im Object-Code überprüfen können. Es existieren auch Mechanismen zur Worstcase-Vorhersage des Zeitverhaltens unter Verwendung des Source-Codes beziehungsweise Object-Codes. Es existiert jedoch kein Verfahren, das die Unabhängigkeit und Verträglichkeit verschiedener mittels Software realisierter technischer Funktionen untereinander überprüft.

Aufgabe der Erfindung ist es, ein derartiges Verfahren bereitzustellen.

Die Aufgabe wird gelöst durch ein Verfahren gemäß dem unabhängigen Anspruch 1. Ausgestaltungen und Weiterbildungen des Erfindungsgedankens sind Gegenstand abhängiger Ansprüche.

Vorteil der Erfindung ist es, daß kein zusätzlicher Aufwand (Direktzugriffsspeicher, Nur-Lese-Speicher, Laufzeit) im Steuergerät selbst erforderlich ist.

Dies wird insbesondere durch die nachfolgend beschriebenen Maßnahmen erreicht, wobei nur die Aufteilung der technischen Funktionen auf die einzelnen Software-Module bekannt sein muß. Unter Aufteilung technischer Funktionen ist beispielsweise zu verstehen, welche Funktion welche Aktoren, Sensoren und so weiter über welche Ports bedient werden, welche Register (z.B. für Grundeinstellungen des Mikrocontrollers, des Mikroprozessors oder der Steuerung) von welcher Funktion bedient werden, wieviel Laufzeit für die jeweilige Funktionen zur Verfügung stehen soll, wie häufig Interrupts, Preemptionen und Taskaufrufe pro Zeiteinheit auftreten werden und welche Schnittstellen die Funktionen untereinander benutzen.

Das erfindungsgemäße Verfahren zur formalen Überprüfung und zum Test von einzubettenden Software-Modulen und entsprechender eingebetteter Gesamt-Software sieht vor, daß die Eigenschaften der einzelnen Software-Module im Hinblick auf die Abgrenzung zu den anderen Software-Modulen statisch und quasi-dynamisch (das heißt: statische Worst-Case-Betrachtung des dynamischen Verhaltens) formal überprüft werden, sowie daß diese Überprüfung bereits vor dem dynamischen Betrieb des Gerätes durchgeführt wird. Das wiederum hat zur Folge, daß vorteilhafterweise keine zusätzliche Überwachungssoftware im aktiven Betrieb benötigt wird.

Vorteilhaft ist auch, daß die Sicherstellung einer einwandfreien allgemeinen technischen Funktionalität bei Geräten mit eingebetteter Software vor allem in Anwendungen, bei denen Teile der Software nicht als Source-Code vorliegen.

Die formale Überprüfung der Abgrenzung der Software-Module betrifft dabei mindestens (aber nicht ausschließlich) die Überprüfung hinsichtlich verbotener Schreib-Zugriffe auf Speicher (beispielsweise auf Register, Direktzugriffsspeicher-Bereiche, Pins, Pointer etc.) und die Überprüfung hinsichtlich der Begrenzung von Schleifenzählern (d.h., daß keine Endlosschleifen vorhanden sind).

Desweiteren kann überprüft werden, ob verbotene Interrupt-Enable/Disable-Operationen durchgeführt werden.

Im Rahmen der Funktionsprüfung kann auch vorgesehen werden,
daß ausgehend von dem Objekt-Code überprüft wird, ob Programmteile direkt aus dem Direktzugriffsspeicher-Bereich ablaufen (also dynamisch änderbar sind);
daß anhand des Object-Codes überprüft wird, wie lange maximal ein Interrupt gesperrt wird;
daß anhand des Object-Codes überprüft wird, wieviel Zeit ein Software-Modul (Task) maximal zur Abarbeitung benötigt;
daß anhand des Object-Codes einer Implementierungsprache wie zum Beispiel OSEK-OIL (insbesondere anhand der Beschreibung der Taskprioritäten, Preemptionen und so weiter) sowie der Angabe der Taskaktivierungsfrequenz das Worstcase-Zeitverhalten der Gesamtheit oder einer Untermenge der Software-Module bestimmt wird; und
daß die Stackgröße aus der Worst-Case-Situation bezüglich Interrupts, Preemptionen etc. sowie deren Priorität und Frequenz ermittelt wird.

Die Erfindung wird nachfolgend anhand der in den Figuren der Zeichnung dargestellten Ausführungsbeispiele näher erläutert. Es zeigt:
- Figur 1: die Umgebung für eine Anwendung eines erfindungsgemäßen Verfahrens und
- Figur 2: das Ablaufdiagramm zu einer bevorzugten Ausführungsform eines erfindungsgemäßen Verfahrens.

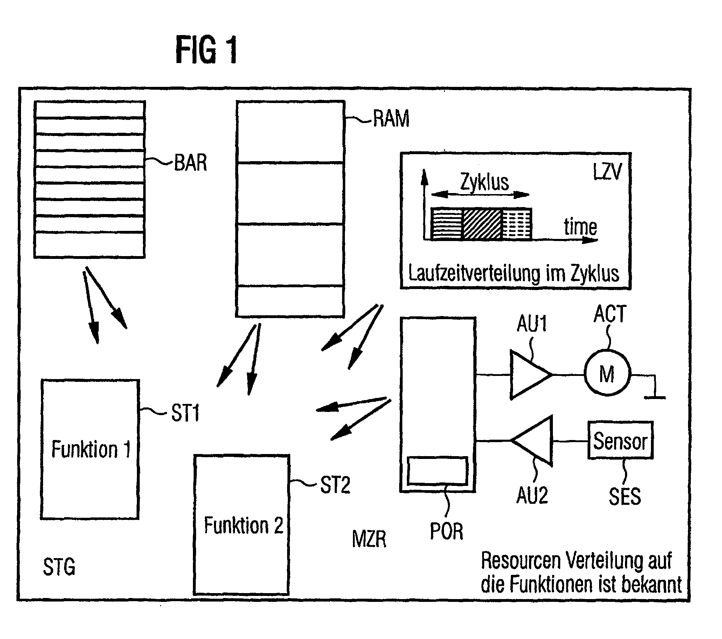

Gemäß Figur 1 sollen innerhalb eines Steuergerätes STG zwei Funktionen mittels Software-Tasks ST1 und ST2 (Software-Module) realisiert werden. Die beiden Software-Tasks ST1 und ST2 laufen dabei in einem, in der Zeichnung nicht dargestellten Prozessor ab, der im Rahmen der beiden Software-Tasks ST1 und ST2 auf ein Basis-Register BAR, auf einen Direktzugriffsspeicher RAM und auf Ports POR zugreift. Die Ports POR sind beispielsweise mit einem Sensor SES und einen Aktor ACT unter Zwischenschaltung von Anpaßeinheiten AU1 und AU2 verbunden. Der Sensor SES gibt dabei Informationen an den Prozessor, der diese mittels der Software-Tasks ST1 und ST2 bearbeitet und dementsprechend den Aktor ACT steuert. Pro Zyklus (= beispielsweise der minimale zeitliche Abstand jeweils bestimmter externer Ereignisse wie etwa der obere Totpunkt bei einem Verbrennungsmotor) ist dabei die Laufzeit gemäß einer Laufzeitverteilung LZV auf bestimmte Funktionen verteilt, wobei allgemein gemäß einer bestimmten Resourcen-Verteilung MZL auf Basis-Register BAR, auf einen Direkt-Zugriffs-Speicher RAM und auf die Ports POR zugegriffen wird.

Bekannt ist dabei insbesondere die Aufteilung der technischen Funktionen auf die einzelnen Software-Tasks ST1 und ST2. Unter Aufteilung technischer Funktionen ist hierbei zu verstehen, welche Funktion der Aktor ACT und welche der Sensor SEN über welchen Port POR bedient. Weiterhin ist bekannt, welche Register (beispielsweise für Grundeinstellungen des Prozessors und damit des Steuergerätes STG) von welcher Funktion (Software-Tasks ST1 und ST2) bedient werden dürfen und wieviel Laufzeit (Laufzeitverteilung LZV) für die jeweilige Funktionen (Software-Tasks ST1 und ST2) zur Verfügung stehen soll. Schließlich ist bekannt, wie häufig Interrupts, Preemptionen und Taskaufrufe pro Zeiteinheit auftreten werden und welche Schnittstellen die Funktionen untereinander benutzen (zum Beispiel "Send-Message-Befehle" oder "Receive-Message-Befehle" bei der Maschinensprache OSEK OIL).

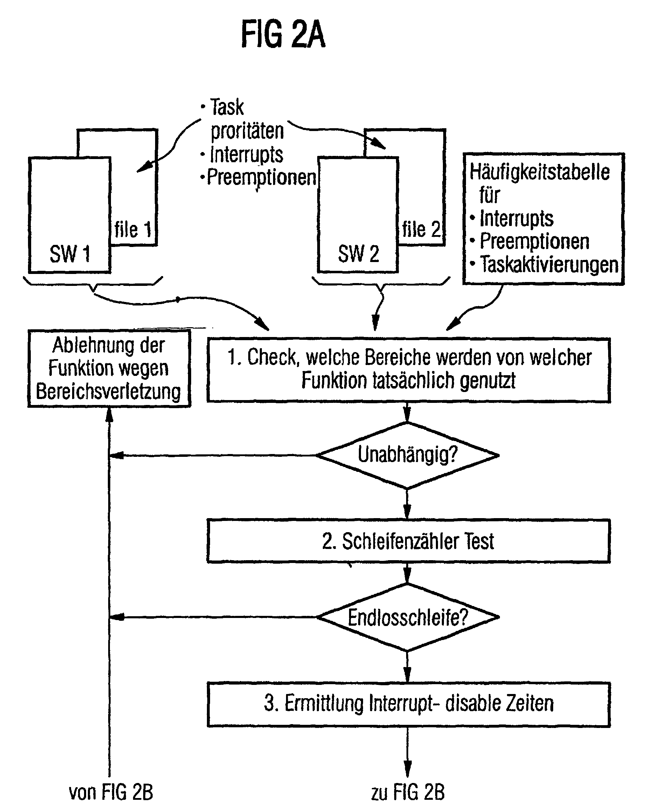

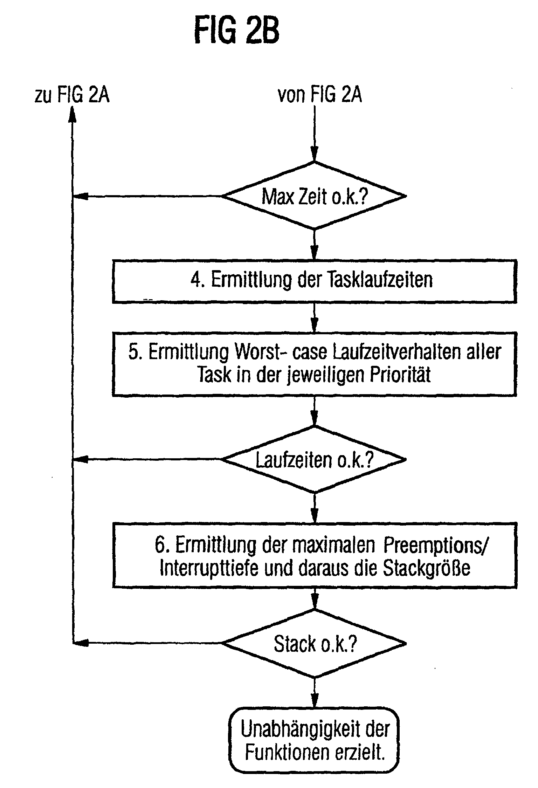

Gemäß Figur 2 stehen die einzelnen Funktionen zunächst als Software-Tasks ST1 und ST2 (Software-Module) zur Verfügung. Bevor nun die Funktionen in das Steuergerät STG integriert werden können, muß deren gegenseitige Verträglichkeit und Unabhängigkeit nachgewiesen werden. Dazu werden nun alle gegenseitigen Beeinflußungen bevorzugt wie folgt identifiziert:

In einem ersten Verfahrensschritt 1 wird das zu testende Software-Modul nach Object-Code-Sequenzen (Maschinen-Code-Sequenzen) durchsucht, die einen Schreib-Zugriff auf unzulässige Bereiche darstellen würden.

In einem zweiten Verfahrensschritt 2 werden die Schleifen und ihre Schleifenzähler der zu testenden Software-Module identifiziert. Es wird ermittelt, wie diese Zähler innerhalb der Schleifen manipuliert werden, und ob zum Schleifenanfang diese Zähler eine statische Grenze aufweisen. Damit wird die maximale Anzahl der Schleifendurchläufe ermittelt.

In einem weiteren Verfahrensschritt 3 wird der Object-Code nach Object-Code-Sequenzen (Maschinen-Code-Sequenzen) durchsucht, die Interrupt-Enable/Disable-Operationen manipulieren. Die Interrupt-Disable-Zeiten werden in Form der dazwischenliegenden Object-Code-Zyklen (Maschinen-Code-Zyklen) aus dem Object-Code ermittelt.

Außerdem wird in einem weiteren Verfahrensschritt 4 die maximale Laufzeit einzelner Software-Module (zum Beispiel OSEK-Tasks) in Form von Object-Code-Zyklen (Maschinen-Code-Zyklen)aus dem Object-Code ermittelt.

In einem Verfahrensschritt 5 wird die Häufigkeit der Interrupts, der Taskaufrufe und der Messages per definierter Zeiteinheit (zum Beispiel per Motorumdrehung im Falle einer Motorsteuerung) sowie die Prioritäten der Tasks und der Messages und der zugelassenen Preemptionen dem Werkzeug zur Verfügung gestellt (zum Beispiel per Eingabe). Damit lassen sich beispielsweise Verfahren zur Ermittlung der Software Runtime und Message Latency Time anwenden.

Parallel wird aus diesen Informationen die maximale Interrupt- und Preemptions-Tiefe ermittelt, um damit die Größe des benötigten Stacks zu ermitteln (Verfahrensschritt 6).

Nach Durchlauf dieses Verfahrens steht fest, ob in den nicht offengelegten Teilen der Software-Module eine Beeinflußung anderer Software-Module stattfindet und ob ausreichend Resourcen (RAM, ROM, Laufzeit) dem jeweiligen Software-Modul zur Verfügung stehen.

Damit ist automatisch sichergestellt, daß die mit dieser Software realisierten technischen Funktionen sich ausschließlich an den offengelegten Schnittstellen gegenseitig beeinflussen, daß sie also untereinander verträglich sind. Zusätzlicher Überwachungsaufwand wird nicht benötigt. Die Überprüfung erfolgt dabei bevorzugt durch eine weitere Prozessoranordnung unter ebenfalls Software-Steuerung.

## Patentansprüche

1. Verfahren zum Testen der Kooperationsfähigkeit von jeweils bestimmte Funktionen in einem Gerät ausführenden Software-Modulen anhand von in den ausführenden Software-Modulen enthaltenen Maschinen-Code-Sequenzen mit den Verfahrensschritten:
a) Durchsuchen der Software-Module nach Maschinen-Code-Sequenzen, die einen Schreib-Zugriff auf unerlaubte Bereiche beinhalten,
b) Ermitteln jeweils der maximalen Anzahl von Schleifendurchläufen je Schleife und Feststellen, ob die maximale Anzahl von Schleifendurchläufen begrenzt ist, und
wobei bei Einhaltung die Kooperationsfähigkeit gegeben und bei Nichteinhaltung der Referenzwerte die Kooperationsfähigkeit nicht gegeben ist.

2. Verfahren nach Anspruch 1 mit dem zusätzlichen Verfahrensschritt:
c) Durchsuchen der Software-Module nach Sequenzen, bei denen unerlaubte Interrupt-Enable/Disable-Operationen durchgeführt werden, wobei bei Einhaltung der Referenzwerte die Kooperationsfähigkeit gegeben und bei Nichteinhaltung der Referenzwerte die Kooperationsfähigkeit nicht gegeben ist.

3. Verfahren nach einem der vorherigen Ansprüche mit dem zusätzlichen Verfahrensschritt:
d) Ermitteln der Interrupt-Disable-Zeiten und Vergleich der Interrupt-Disable-Zeiten mit jeweils entsprechenden Referenzwerten, wobei bei Einhaltung der Referenzwerte die Kooperationsfähigkeit gegeben und bei Nichteinhaltung der Referenzwerte die Kooperationsfähigkeit nicht gegeben ist.

4. Verfahren nach einem der vorherigen Ansprüche mit dem zusätzlichen Verfahrensschritt:
e) Ermitteln der maximalen Laufzeit der einzelnen ausführenden Software-Module und Vergleich der maximalen Laufzeit der einzelnen ausführenden Software-Module mit jeweils entsprechenden Referenzwerten, wobei bei Einhaltung der Referenzwerte die Kooperationsfähigkeit gegeben und bei Nichteinhaltung der Referenzwerte die Kooperationsfähigkeit nicht gegeben ist.

5. Verfahren nach einem der vorherigen Ansprüche mit dem zusätzlichen Verfahrensschritt:
f) Ermitteln der Gesamtlaufzeit und der Nachrichten-Latenz-Zeit und Vergleich der Gesamtlaufzeit und der Nachrichten-Latenz-Zeit mit jeweils entsprechenden Referenzwerten, wobei bei Einhaltung der Referenzwerte die Kooperationsfähigkeit gegeben und bei Nichteinhaltung der Referenzwerte die Kooperationsfähigkeit nicht gegeben ist.

6. Verfahren nach einem der vorherigen Ansprüche mit dem zusätzlichen Verfahrensschritt:
g) Ermitteln der maximalen Interrupt- und Preemptionstiefe und Vergleich der maximalen Interrupt- und Preemptionstiefe mit jeweils entsprechenden Referenzwerten, wobei bei Einhaltung der Referenzwerte die Kooperationsfähigkeit gegeben und bei Nichteinhaltung der Referenzwerte die Kooperationsfähigkeit nicht gegeben ist.

7. Verfahren nach Anspruch 2, bei dem die Anzahl der Schleifendurchläufe ermittelt wird durch:
Identifizieren der Schleifen und ihrer zugehörigen Schleifenzähler, Feststellen, auf welche Weise die Zähler manipuliert werden und
Feststellen, ob am Schleifenanfang die Zähler jeweils eine statische Grenze aufweisen.

8. Verfahren nach Anspruch 3, bei dem die Interrupt-Disable-Zeiten ermittelt werden durch:
Durchsuchen der Software-Module nach Interrupt-Enable/Disable-Code manipulierenden Maschinen-Code-Sequenzen und
Bestimmen der zwischen jeweils diesen Maschinen-Code-Sequenzen liegenden Zeiten.

9. Verfahren nach Anspruch 4, bei dem die maximale Laufzeit der einzelnen ausführenden Software-Module ermittelt wird anhand der Anzahl von Maschinen-Zyklen.

10. Verfahren nach Anspruch 5, bei dem Gesamtlaufzeit und Nachrichten-Latenz-Zeit ermittelt werden durch:
Bestimmen der Häufigkeit der Interrupts, der Taskaufrufe und der Nachrichten per definierter Zeiteinheit und
Feststellen der Prioritäten der Tasks, der Messages und der zugelassenen Preemptionen.

11. Verfahren nach Anspruch 6, bei dem die maximale Interrupt- und Preemptionstiefe ermittelt wird durch:
Bestimmen der Häufigkeit der Interrupts, der Taskaufrufe und der Nachrichten per definierter Zeiteinheit und
Feststellen der Prioritäten der Tasks, der Messages und der zugelassenen Preemptionen.

12. Verfahren nach Anspruch 11, bei dem die Größe eines benötigten Stacks aus der maximalen Interrupt- und Preemptionstiefe ermittelt wird.

13. Verfahren nach einem der vorherigen Ansprüche, bei dem die Software-Module dahingehend untersucht werden, ob Maschinen-Code-Sequenzen direkt aus einem Direkt-Zugriffs-Speicher heraus ablaufen.

## Claims

1. Method for testing the ability to cooperate of software modules executing defined functions in each case in a device on the basis of machine code sequences contained in the executing software modules with the process steps:
a) Searching the software modules for machine code sequences which contain a write access to non-permitted areas,
b) Determining the maximum number in each case of loop cycles per loop and ascertaining whether the maximum number of loop cycles is restricted, and,
whereby if the reference values are complied with the ability to cooperate exists and if the reference values are not complied with the ability to cooperate does not exist.

2. Method according to Claim 1 with the additional process step:
c) Searching the software modules for sequences in which non-permitted interrupt-enable/disable operations are performed, whereby if the reference values are complied with the ability to cooperate exists and if the reference values are not complied with the ability to cooperate does not exist.

3. Method according to one of the preceding claims with the additional process step:
d) Determining the interrupt-disable times and comparing the interrupt-disable times with corresponding reference values in each case, whereby if the reference values are complied with the ability to cooperate exists and if the reference values are not complied with the ability to cooperate does not exist.

4. Method according to one of the preceding claims with the additional process step:
e) Determining the maximum runtime of the individual executing software modules and comparing the maximum runtime of the individual executing software modules with corresponding reference values in each case, whereby if the reference values are complied with the ability to cooperate exists and if the reference values are not complied with the ability to cooperate does not exist.

5. Method according to one of the preceding claims with the additional process step:
f) Determining the total runtime and the message latency and comparing the total runtime and the message latency with corresponding reference values in each case, whereby if the reference values are complied with the ability to cooperate exists and if the reference values are not complied with the ability to cooperate does not exist.

6. Method according to one of the preceding claims with the additional process step:
g) Determining the maximum interrupt and pre-emption depths and comparing the maximum interrupt and pre-emption depths with corresponding reference values in each case, whereby if the reference values are complied with the ability to cooperate exists and if the reference values are not complied with the ability to cooperate does not exist.

7. Method according to Claim 2, in which the number of loop cycles is determined by:
Identifying the loops and their associated loop counters,
ascertaining how the counters are manipulated and
ascertaining whether at the start of the loop the counters have a steady-state limit in each case.

8. Method according to Claim 3, in which the interrupt-disable times are determined by:
Searching the software modules for machine code sequences manipulating interrupt/enable/disable code and
determining the times between these machine code sequences in each case.

9. Method according to Claim 4, in which the maximum runtime of the individual executing software modules is determined on the basis of the number of machine cycles.

10. Method according to Claim 5, in which the total runtime and message latency are determined by:
Determining the frequency of the interrupts, the task calls and the messages per defined time unit and
ascertaining the priorities of the tasks, the messages and the permitted preemptions.

11. Method according to Claim 6, in which the maximum interrupt and pre-emption depths are determined by:
Determining the frequency of the interrupts, the task calls and the messages per defined time unit and
ascertaining the priorities of the tasks, the messages and the permitted preemptions.

12. Method according to Claim 11, in which the size of a required stack is determined from the maximum interrupt and pre-emption depth.

13. Method according to one of the preceding claims, in which the software modules are examined to see whether machine code sequences run directly from a direct access memory.

## Revendications

1. Procédé pour tester l'aptitude à la coopération de certaines fonctions données dans des modules logiciels exécutés dans un appareil au moyen des séquences de code machine contenues dans les modules logiciels exécutés avec les étapes de procédé :
a) recherche dans les modules logiciels des séquences de code machine qui contiennent un accès en écriture à des zones interdites,
b) détermination à chaque fois du nombre maximum de passages pour chaque boucle et vérification de la limitation du nombre maximum de passages de la boucle, et
l'aptitude à la coopération étant acquise si les valeurs de référence sont respectées et non acquise si elles ne sont pas respectées.

2. Procédé selon la revendication 1, comprenant l'étape de procédé supplémentaire :
c) recherche dans les modules logiciels des séquences qui exécutent des opérations interdites d'activation/désactivation d'interruptions, l'aptitude à la coopération étant acquise si les valeurs de référence sont respectées et non acquise si elles ne sont pas respectées.

3. Procédé selon l'une des revendications précédentes, comprenant l'étape de procédé supplémentaire :
d) détermination des périodes de désactivation des interruptions et comparaison des périodes de désactivation des interruptions avec les valeurs de référence respectives correspondantes, l'aptitude à la coopération étant acquise si les valeurs de référence sont respectées et non acquise si elles ne sont pas respectées.

4. Procédé selon l'une des revendications précédentes, comprenant l'étape de procédé supplémentaire :
e) détermination du temps d'exécution maximum de chacun des modules logiciels exécutés et comparaison du temps d'exécution maximum de chacun des modules logiciels exécutés avec les valeurs de référence respectives correspondantes, l'aptitude à la coopération étant acquise si les valeurs de référence sont respectées et non acquise si elles ne sont pas respectées.

5. Procédé selon l'une des revendications précédentes, comprenant l'étape de procédé supplémentaire :
f) détermination du temps d'exécution total et du temps de latence des messages et comparaison du temps d'exécution total et du temps de latence des messages avec les valeurs de référence respectives correspondantes, l'aptitude à la coopération étant acquise si les valeurs de référence sont respectées et non acquise si elles ne sont pas respectées.

6. Procédé selon l'une des revendications précédentes, comprenant l'étape de procédé supplémentaire :
g) détermination de la profondeur maximale des interruptions et des préemptions et comparaison de la profondeur maximale des interruptions et des préemptions avec les valeurs de référence respectives correspondantes, l'aptitude à la coopération étant acquise si les valeurs de référence sont respectées et non acquise si elles ne sont pas respectées.

7. Procédé selon la revendication 2, avec lequel le nombre de passages de la boucle est déterminé par :
identification des boucles et de leurs compteurs de boucle associés,
détermination du mode de manipulation des compteurs, et
détermination de la présence d'une limite statique pour chaque compteur au début de la boucle.

8. Procédé selon la revendication 3, avec lequel les périodes de désactivation des interruptions sont déterminées par :
recherche dans les modules logiciels des séquences de code machine qui manipulent des codes d'activation/désactivation d'interruptions, et
détermination des durées existantes entre chacune de ces séquences de code machine.

9. Procédé selon la revendication 4, avec lequel le temps d'exécution maximum de chacun des modules logiciels exécutés est déterminé à l'aide du nombre de cycles machine.

10. Procédé selon la revendication 5, avec lequel le temps d'exécution total et le temps de latence des messages sont déterminés par :
détermination de la fréquence des interruptions, des appels de tâche et des messages par unité de temps donnée, et
détermination des priorités des tâches, des messages et des préemptions autorisées.

11. Procédé selon la revendication 6, avec lequel la profondeur maximale des interruptions et des préemptions est déterminée par :
détermination de la fréquence des interruptions, des invocations de tâche et des messages par unité de temps donnée, et
détermination des priorités des tâches, des messages et des préemptions autorisées.

12. Procédé selon la revendication 11, avec lequel la taille d'une pile nécessaire est déterminée à partir de la profondeur maximale des interruptions et des préemptions.

13. Procédé selon l'une des revendications précédentes, avec lequel on recherche dans les modules logiciels si les séquences de code machine se déroulent directement à partir d'une mémoire à accès direct.
